# EUROPEAN PATENT SPECIFICATION

(11) **EP 2 561 030 B1**
(45) Date of publication and mention of the grant of the patent: **21.01.2015**
(21) Application number: 11772548.1
(22) Date of filing: 19.04.2011
(51) Int. Cl.: B29C 73/16, C08J 9/14

(54) **TIRE SEALER AND INFLATOR COMPOSITION**
REIFENDICHTUNGS- UND -AUFBLASZUSAMMENSETZUNG
COMPOSITION ANTI-FUITE ET DE GONFLAGE POUR PNEU

(30) Priority: 31.12.2010 US 428967 P; 19.04.2010 US 325589 P
(43) Date of publication of application: 27.02.2013
(73) Proprietor: Holt Lloyd International Limited, Manchester M32 0YQ (GB)
(72) Inventor: ALEXANDER, Mark Veselinovich, Bridgewater, Connecticut 06752 (US); DILLEY, Colin, Thomaston, CT 06787 (US); TURNER, Edward, Danbury, CT 06811 (US)
(74) Representative: Houghton, Mark Phillip
(86) International application number: PCT/US2011/033045
(87) International publication number: WO 2011/133546

(56) References cited:
- EP-A1- 2 017 050
- WO-A1-01/98065
- WO-A2-2010/009090
- CA-A1- 2 273 672
- US-A- 4 948 852
- US-A- 5 124 395
- US-A- 5 595 687
- US-A1- 2004 132 364
- US-A1- 2007 098 646
- US-A1- 2008 135 800

## Description

### BACKGROUND

Tire sealing compositions that both inflate and seal tires are well known. For example, Magyar et al. U.S. Pat. No. 4,501,825 discloses a tire sealer and inflator composition that includes a resin, a latex sealant, an alkylene glycol, fibers, an alkanol amine, a foaming agent, and water. The composition is admixed with a chlorofluorocarbon propellant/inflator. Other patents which disclose tire sealing compositions include those to Jaspon, U.S. Pat. No. 4,337,332, to Ornum et al. U.S. Pat. No. 4,426,468, and to Kent U.S. Pat. Nos. 4,224,208, 4,137,206, and 4,101,494. CA 2273672 discloses a water-based tire sealant and inflator composition using acrylic resin and hydrofluorocarbon propellant. US 2008/0135800 discloses foaming agents and compositions including fluoroalkenes as blowing agents. WO 2010/009090 discloses fluoroalkenes as blowing agents. WO 01/98065 discloses a tire sealer and inflating composition using a fluoroalkene. US 5124395 discloses a sealant composition including fluoroalkene. US 2007/0098646 discloses an aerosol propellant including fluoroalkene. A propellant/inflator is defined herein as any substance which can propel a solution from a container into an inflatable object, and which will also act to inflate the object.

Prior art tire sealing and/or inflating compositions use hydrocarbons, chlorofluorocarbons, or fluorocarbons as propellants/inflators. Most hydrocarbon propellants are flammable, and there are difficulties and potential risks associated with using hydrocarbons as inflators. Chlorofluorocarbons, CFCs, have been used throughout the world in refrigerators, air conditioners, aerosols, and for blowing foam insulation. CFCs are generally viewed as being non-toxic, non-flammable, and safe for use in proximity to humans. Unfortunately, CFCs have a harmful effect on the ozone layer located in the upper atmosphere; since the ozone layer filters harmful radiation from the Earth's surface, increased incidences of skin cancer are believed to result from reductions in the ozone layer thickness or concentration.

Efforts have been made on an international level to reduce CFC usage; these efforts resulted in The Vienna Convention and its Montreal Protocol, which are designed to protect the ozone layer by limiting the amount of CFCs released into the atmosphere. Since not all CFCs regulated by the protocol pose the same threat to the ozone layer, individual compounds are assigned ozone depletion potentials, ODPs. ODPs are a measure of the possible effect of the chlorine released by a CFC on the ozone concentration in the ozone layer. ODPs are calculated from the atmospheric lifetime of the compound, and from the effectiveness of the chlorine released once the compound is decomposed by ultra-violet light. For example, CFC-11 (otherwise known as F-11, freon-11, arcton, or trichlorofluoromethane) has an ODP of 1.0, as does freon 12 (dichlorodifluoromethane). A compound with an ODP of zero should have no substantial negative impact on the ozone layer.

Hydrofluorocarbons (HFC) have been used to replace CFC compounds in many instances. HFC compounds do not deplete the ozone but it has recently been discovered that they can have an impact on global warming. Many HFC compounds are more potent warming agents than carbon dioxide. For example, HFC- 134a (1,1,1,2- tetrafluoroethane), which has an ODP of zero, has been used but suffers drawbacks of lower tire pressure inflation and a high global warming potential (GWP) of 1300.

It is therefore desirable to replace the chlorofluorocarbon, flammable hydrocarbon and HFC-134 a propellant/inflators used in conventional tire sealing and inflator compositions with a non-flammable substitute, which has a low ozone depletion potential, low global warming potential, and addresses some or all of the drawbacks of 134a.

Numerous challenges must be overcome in order to create a successful tire sealer and inflator compositions with a nonflammable, non-ozone depleting propellant/inflator. These problems result from the vapor pressures and solvent properties of the propellant/inflator as well as difficulties in obtaining more complete discharge of the composition from the can. Residual material left in the can after exhaustion of the propellant is undesirable so it should be minimized as much as possible.

It is particularly important that any propellant/inflator used in a tire sealer and inflator composition be capable of storage in canisters which can be safely transported. The U.S. Department of Transportation, DOT, has issued regulations regarding minimum performance characteristics of containers which can be used in interstate transportation.

Tire sealer/inflator cans are frequently stored in the trunks of vehicles, or worse, are exposed to direct sunlight in sealed vehicles in mid-summer. Therefore, internal pressure and can strength are very important safety parameters, which must be considered in producing a tire sealer/inflator composition.

### BRIEF DESCRIPTION

The present invention in its various aspects is as set out in the appended claims. Disclosed herein is a sealer and inflator composition, comprising: a concentrate; and a propellant/inflator comprising tetrafluoropropene. Also disclosed is a container comprising the sealer and inflator composition as well as a method for using the sealer and inflator composition to inflate an inflatable object.

### DETAILED DESCRIPTION

Disclosed herein is a new sealer and inflator composition contained in an aerosol container, which has a propellant/inflator that is non-flammable (at ambient temperature and pressure), does not harm the ozone layer, and has a reduced impact on global warming. The sealer and inflator composition comprises a concentrate, which is capable of sealing openings in inflatable objects, and a propellant/inflator comprising tetrafluoropropene. The propellant/inflator may have an ozone depletion potential of less than or equal to 5 and a global warming potential of less than or equal to 1000, or, more specifically, less than or equal to 750, or, even more specifically, less than or equal to 500.

The sealer and inflator composition as described herein has a decreased impact on global warming compared to previous sealer and inflator compositions. Additionally, there is no need for a vapor pressure depressant. The sealer and inflator composition shows higher initial inflation pressure than current commercially available products. Furthermore the sealer and inflator composition demonstrates faster and more complete discharge into a tire from an aerosol can than comparable commercially available compositions. Additionally, the sealer and inflator composition demonstrates excellent foaming and sealing performance, particularly in the absence of a vapor pressure depressant.

The propellant/inflator comprises hydrofluoro olefin (HFO) 1234. The term "HFO-1234" is used herein to refer to all tetrafluoropropenes. Among the tetrafluoropropenes are included 2,3,3,3-tetrafluoropropene (HFO-1234yf) and both cis- and trans-1,3,3,3-tetrafluoropropene (HFO-1234ze). The term HFO-1234ze is used herein generically to refer to 1,3,3,3-tetrafluoropropene, independent of whether it is the cis- or trans-form. The terms "cis HFO-1234ze" and "trans HFO-1234ze" are used herein to describe the cis- and transforms of 1,3,3,3-tetrafluoropropene respectively. The term "HFO-1234ze" therefore includes within its scope cis HFO-1234ze, trans HFO-1234ze, and all combinations and mixtures of these. HFO-1234 is commercially available from Honeywell Fluorine Products Europe B.V. and is described in U.S. Patent Publication 2008/0292564.

The propellant can consist of HFO-1234. HFO-1234 has a global warming potential (GWP) of 6 in contrast to HFC-134a which has a GWP of 1300. The extent to which a gas contributes to radiative forcing (global warming) depends in part on the elapsed time before it is purged from the atmosphere and the infrared energy absorptive properties of the gas. The GWP is a calculated parameter that takes these two properties into account.

The propellant/inflator may comprise a mixture of HFO-1234 in combination with one or more additional propellants, e.g., HFO-152a, HFC-134a, HFC-143b, CO₂, N₂, dimethyl ether, and combinations thereof. An exemplary combination is HFO-1234 and HFC-134a. The mixture may comprise 1 to 75 weight percent HFC-134a, based on the total weight of propellant. Within this range the amount of HFC-134a can be greater than or equal to 5 weight percent, or, more specifically, greater than or equal to 10 weight percent. Also within this range the amount of HFC-134a can be less than or equal to 65 weight percent, or, more specifically, less than or equal to 50 weight percent. When blends of propellants are used the composition of the propellant blend should take into account the GWP of each component and the estimated GWP of the blend.

The propellant/inflator can be present in an amount of 20 to 95 weight percent, based on the total weight of the sealer and inflator composition. Within this range the propellant can be present in an amount greater than or equal to 25 weight percent. Also within this range the propellant can be present in an amount less than or equal to 80 weight percent.

The concentrate comprises a polymer emulsion (also known as a polymer dispersion) combined with a carrier. The polymer emulsion can be aqueous or organic solvent based. The polymer emulsion may have a solids content of 15 weight percent to 75 weight percent, based on the total weight of the emulsion. Within this range the percent solids content may be greater than or equal to 30 weight percent, or, more specifically, greater than or equal to 55 weight percent. Also within this range the percent solids content may be less than or equal to 70 weight percent. The emulsion may be stabilized with a surfactant, thickener or both. The emulsion comprises an elastomeric polymer. Exemplary elastomeric polymers include vinyl acetate copolymers and copolymers of styrene and butadiene as well as polymers and copolymer comprising natural rubber, butyl rubber, acrylonitrile, butadiene, styrene, isoprene, acetate, vinyl, acrylic, maleic anhydride, styrenic block copolymers having a hydrogenated midblock (such as SEBS and SEPS) and combinations of the foregoing polymers and copolymers. In some embodiments the elastomeric polymer is present as a latex. Commercially available polymeric emulsions and dispersions include Flexbond® 150 (available from Air Products) and Litex® S 61 (available from Polymer Latex).

The polymer emulsion can be present in an amount of 3 to 30 weight percent, based on the total weight of the sealer and inflator composition. Within this range the amount the polymer dispersion can be greater than or equal to 4 weight percent. Also within this range the amount of the polymer emulsion can be less than or equal to 25 weight percent, or, more specifically, less than or equal to 20 weight percent, or, even more specifically, less than or equal to 15 weight percent.

The carrier can comprise water, an organic solvent, or a combination thereof. The carrier is present in addition to the liquid portion of the polymer emulsion. The carrier can be the same or different from the liquid portion of the polymer emulsion. Exemplary organic solvents include glycol ethers, dialkyl ethers, esters, chlorinated solvents and combinations of the foregoing solvents. Exemplary glycol ethers include ethylene glycol monomethyl ether (2-methoxyethanol, CH₃OCH₂CH₂OH), ethylene glycol monoethyl ether (2-ethoxyethanol, CH₃CH₂OCH₂CH₂OH), ethylene glycol monopropyl ether (2-propoxyethanol, CH₃CH₂CH₂OCH₂CH₂OH), ethylene glycol monoisopropyl ether (2-isopropoxyethanol, (CH₃)₂CHOCH₂CH₂OH), ethylene glycol monobutyl ether (2-butoxyethanol, CH₃CH₂CH₂CH₂OCH₂CH₂OH), ethylene glycol monophenyl ether (2-phenoxyethanol, C₆H₅OCH₂CH₂OH), ethylene glycol monobenzyl ether (2-benzyloxyethanol, C₆H₅CH₂OCH₂CH₂OH), diethylene glycol monomethyl ether (2-(2-methoxyethoxy)ethanol, methyl carbitol, CH₃OCH₂CH₂OCH₂CH₂OH), diethylene glycol monoethyl ether (2-(2-ethoxyethoxy)ethanol, carbitol cellosolve, CH₃CH₂OCH₂CH₂OCH₂CH₂OH), diethylene glycol mono-n-butyl ether (2-(2-butoxyethoxy)ethanol, CH₃CH₂CH₂CH₂OCH₂CH₂OCH₂CH₂OH). Exemplary dialkyl ethers include ethylene glycol dimethyl ether (dimethoxyethane, CH₃OCH₂CH₂OCH₃), ethylene glycol diethyl ether (diethoxyethane, CH₃CH₂OCH₂CH₂OCH₂CH₃), ethylene glycol dibutyl ether (dibutoxyethane, CH₃CH₂CH₂CH₂OCH₂CH₂OCH₂CH₂CH₂CH₃). Exemplary esters include ethylene glycol methyl ether acetate (2-methoxyethyl acetate, CH₃OCH₂CH₂OCOCH₃), ethylene glycol monoethyl ether acetate (2-ethoxyethyl acetate, CH₃CH₂OCH₂CH₂OCOCH₃), and ethylene glycol monobutyl ether acetate (2-butoxyethyl acetate, CH₃CH₂CH₂CH₂OCH₂CH₂OCOCH₃). In some embodiments the carrier is water.

The carrier can be present in an amount of 20 to 80 weight percent, based on the total weight of the sealer and inflator composition. Within this range the amount the carrier can be greater than or equal to 25 weight percent. Also within this range the amount of the carrier can be less than or equal to 75 weight percent.

The sealer and inflator composition can optionally comprise a vapor pressure depressant (VPD), a freezing point depressant (FPD), a corrosion inhibitor, or a combination of two of more of the foregoing. Compositions free of a vapor pressure depressant, a freezing point depressant, a corrosion inhibitor, or a combination of the foregoing are explicitly contemplated. All components of the sealer and inflator composition should be "neutral" to the tire, tire pressure sensor and wheel rim alloy. Stated another way, all components of the composition should not harm or degrade the tire, tire pressure sensor or wheel rim alloy.

The sealer and inflator composition may comprise a vapor pressure depressant. The vapor pressure depressant is chosen such that it is capable of maintaining the vapor pressure of a sealer/inflator composition containing HFO-1234 and a sealant below 1.24 x10⁶Pa (180 psig) at 54.4°C (130°F), and at the same time be functional at expected low use temperatures, for example, in the -3.9°C (25° F) range. Exemplary vapor pressure depressants include ethylene glycol monoalkyl ethers and diethylene glycol monoalkyl ethers wherein the alkyl group has up to 4 carbons. Examples of vapor pressure depressants include 2-butoxyethanol (butyl CELLOSOLVE(TM)) and 2-(2-methoxyethoxy) ethanol (methyl CARBITOL(TM)). It should also be noted that some solvents described above can function as a vapor pressure depressant.

The vapor pressure depressant may be present in an amount up to 40 weight percent, based on the total weight of the sealer and inflator composition. Within this range the vapor pressure depressant can be present in an amount greater than or equal to 20 weight percent. Also within this range the vapor pressure depressant can be present in an amount less than or equal to 30 weight percent.

The sealer and inflator composition may comprise a freezing point depressant. The freezing point depressant is chosen such that depresses the freezing point of the composition below the expected low use temperature but does not interfere with the sealing or inflating properties of the composition. Exemplary freezing point depressants include ethylene glycol, propylene glycol, alcohols having up to 5 carbons, and combinations of two or more of the foregoing.

The freezing point depressant may be present in an amount up to 25 weight percent, based on the total weight of the sealer and inflator composition. Within this range the freezing point depressant can be present in an amount greater than or equal to 1 weight percent, or, more specifically, greater than or equal to 2 weight percent. Also within this range the freezing point depressant can be present in an amount less than or equal to 8 weight percent, or, more specifically, less than or equal to 6 weight percent. In another embodiment, the freezing point depressant can be present in an amount greater than or equal to 10 weight percent, or, more specifically, greater than or equal to 12 weight percent. Also within this range the freezing point depressant can be present in an amount less than or equal to 22 weight percent, or, more specifically, less than or equal to 20 weight percent.

The sealer and inflator composition may comprise a corrosion inhibitor. The corrosion inhibitor is usually chosen depending on the composition and type of container used to hold the composition. An exemplary corrosion inhibitor is aqueous ammonia. The aqueous ammonia can be present in an amount up to 2 weight percent based on the total weight of the sealer and inflator composition. The aqueous ammonia can have an ammonia concentration of 25 to 35 weight percent, based on the total weight of the solution.

The sealer and inflator composition can be contained in an aerosol container under sufficient pressure to liquify the propellant/inflator. Such containers are well-known in the art, and preferably comprise an exit port which is operated by a valve. Preferably, the exit port is provided with a flexible tube, or an adapter-actuator, that terminates with a connector which can be fitted to conventional tire valve stems. Preferably, the interior of the container is placed in fluid communication with the interior of a tire or other object to be inflated by connecting the connector on the tube, or the adapter- actuator, to a valve stem or similar inlet on a tire or inflatable object, and actuating the valve on the container. This allows the pressure inside of the container to reach equilibrium with the pressure inside the tire or inflatable object; the lower pressure in the tire allows the liquified propellant/inflator to vaporize to its gaseous state, and to thereby expand; this pressure differential propels both sealant and the propellant/inflator into the inflatable object. Provided the inflatable object or tire being inflated achieves an internal pressure which is greater than the external pressure applied thereto, the tire or other inflatable object will be inflated and, provided any holes in the tire or inflatable object are sealed, will stay inflated.

Tire sealer and inflator compositions are generally sold in cans which are capable of withstanding internal pressures of 1.1 x 10⁶Pa (160 psig) without distorting, and which will not burst at pressures beneath 1.65 X 10⁶Pa (240 psig). This is consistent with Title 49 of the U.S. Code of Federal Regulations $178.33, which requires that a can must not burst at 1.5 times the internal pressure measured at 54.4°C (130°F). The DOT designates cans as "2-P" which can withstand distortion at pressures beneath 1.1 x 10⁶Pa (160 psig) and which will not burst below 1.65 x 10⁶Pa (240 psig), and designates cans as "2-Q" which will not distort at pressures beneath 180 psig and which will not burst at pressures below 1.86 x 10⁶Pa (270 psig). See Title 49 of the U.S. Code of Federal Regulations

for an understanding of the general requirements, and see 49 CFR §§178.33 and 178.33a for specific requirements.

Aerosol cans are available in different sizes. One of ordinary skill in the art is readily able to determine the necessary amount of concentrate and propellant based on can size. As a general guide a 13.25 ounce (375 grams) can would contain 311 to 323 grams of concentrate and 100 to 104 grams of propellant. An 18 ounce (510 grams) can would contain 372 to 382 grams of concentrate and 148 to 152 grams of propellant.

Aqueous sealants combined with a propellant require vigorous mixing immediately prior to and during use, thus allowing for uniform dispensing of the product. This is especially useful if a container filled with the sealer and inflator composition is to be used more than once, since poor mixing of the propellant/inflator with the sealant composition tends to lead to incomplete dispensing of the sealant composition. Preferably, containers are filled with sufficient concentrate and propellant/inflator that standard automotive and light truck tires can be completely inflated at ambient temperature, with a resulting internal pressure in the tire being sufficient to support the weight of a vehicle and safely drive to a tire repair facility.

### EXAMPLES

The following examples used the materials shown in Table 1.

**Table 1.**

| Name | Description |
|---|---|
| Flexbond® 150 | A polymer emulsion/dispersion commercially available from Air Products |
| Ethylene glycol | Freezing point depressant |
| Butyl Cellosolve™ | 2-butoxyethanol |
| HFO-1234ze | Propellant |
| HFC-134a | Propellant |
| Ammonia (28 wt%) | Aqueous ammonia solution containing 28 weight percent ammonia |

The compositions shown in Table 2 were made by combining the liquid ingredients in the amounts and order shown. The aerosol cans were charged with the correct amount of liquid concentrate for the size of can being used. An aerosol valve was inserted and crimped into the can to seal the container. A vacuum was applied to the container through the valve to remove the air in the head space. The can was charged through the valve with the required amount of propellant. The amounts in Table 2 are in grams. Vapor pressure was measured using a pressure gauge which was calibrated to read zero at atmospheric pressure. Prior to the measurement of the vapor pressure of a can, the pressure gauge was pre-pressurized at 7.58×10⁵ Pascals. Vapor pressure values are expressed in Pascals. Some of the compositions shown in Table 2 were also tested in a punctured tire. 225/60R18 tires on a 2006 Dodge Charger were punctured and then re-inflated using the compositions described herein. An initial inflation pressure of 3.45×10⁴ Pascals is sufficient to lift the rim off the ground and permit movement to a repair facility. Higher initial inflation pressures are generally desirable. Initial inflation pressure was determined using a pressure gauge which was calibrated to read zero at atmospheric pressure. Each example shown in Table 3 was tested 3-6 times as shown. Values in Table 3 are in Pascals. Additionally, a commercial product, which contains a vapor pressure depressant as well as HFC-134a as the propellant/inflator, was also tested and the results are shown in Table 3.

**Table 2**

| Example | Example 1 | Example 2 | Example 3 | Example 4 | Example 5 | Example 6 | Example 7 | Example 8 | Example 9* | Example 10* |
|---|---|---|---|---|---|---|---|---|---|---|
| Flexbond® 150 | 36.9 | 36.9 | 36.9 | 36.9 | 36.9 | 36.9 | 36.9 | 36.9 | 36.9 | 36.9 |
| Ethylene Glycol | 12.6 | 12.6 | 12.6 | 12.6 | 12.6 | 12.6 | 12.6 | 12.6 | 12.6 | 12.6 |
| Butyl Cellosolve™ | - | 66.4 | - | 66.4 | - | 66.4 | - | 66.4 | - | 66.4 |
| Ammonia (28 wt%) | 3.7 | 3.7 | 3.7 | 3.7 | 3.7 | 3.7 | 3.7 | 3.7 | 3.7 | 3.7 |
| HFO-1234ze | 102 | 102 | 91.8 | 91.8 | 71 | 71 | 51 | 51 | - | - |
| HFC-134a | - | - | 10.2 | 10.2 | 31 | 31 | 51 | 51 | 102 | 102 |
| Water | 260.7 | 194.3 | 260.7 | 194.3 | 260.7 | 194.3 | 260.7 | 194.3 | 194.3 | 194.3 |
| Vapor Pressure in Pascals | | | | | | | | | | |
| 21.1 °C (70 °F) | 3.17x10⁵ | 2.96x10⁵ | 4.27x10⁵ | 3.86x10⁵ | 4.27x10⁵ | 3.93x10⁵ | 4.41x10⁵ | 4.14x10⁵ | 5.10x10⁵ | 4.8x10⁵ |
| 37.8 °C (100 °F) | 5.52x10⁵ | 4.96x14⁵ | 6.76x10⁵ | 6.34x10⁵ | 7.31x10⁵ | 6.41x10⁵ | 7.52x10⁵ | 6.83x10⁵ | 8.6x10⁵ | 7.58x10⁵ |
| 48.9 °C (120 °F) | 8.41x10⁵ | 7.03x10⁵ | 9.24x10⁵ | 8.27x10⁵ | 9.93x10⁵ | 9.10x10⁵ | 1.05x10⁶ | 9.51x10⁵ | 1.17x10⁶ | 9.79x10⁵ |
| 54.4 °C (130 °F) | 9.10x10⁵ | 7.72x10⁵ | 9.93x10⁵ | 8.55x10⁵ | 1.08X10⁶ | 9.51x10⁵ | 1.12x10⁶ | 9.93x10⁵ | vented | 1.08x10⁶ |
| 60.0 °C (140 °F) | 1.05x10⁶ | 8.83x10⁵ | 1.13x10⁶ | 9.51x10⁵ | 1.17x10⁶ | 9.79x10⁵ | vented | 1.03x10⁶ | vented | vented |

| | | | | | | | | | | |
|---|---|---|---|---|---|---|---|---|---|---|
| *Comparative Example "vented" means exceeded pressure capacity of can and contents vented to atmosphere | | | | | | | | | | |

**Table 3.**

| | Example 1 | Example 2 | Example 3 | Example 4 | Example 10* | Commercial Product* |
|---|---|---|---|---|---|---|
| 1 | 3.79x10⁴ | 3.24x10⁴ | 3.65x10⁴ | 2.28x10⁴ | 3.17x10⁴ | 3.38x10⁴ |
| 2 | 3.59x10⁴ | 3.65x10⁴ | 3.79x10⁴ | 2.76x10⁴ | 3.65x10⁴ | 2.96x10⁴ |
| 3 | 3.86x10⁴ | 3.52x10⁴ | 4.76x10⁴ | 3.03x10⁴ | 3.52x10⁴ | 3.65x10⁴ |
| 4 | 4.00x10⁴ | 3.31x10⁴ | | | 3.65x10⁴ | 3.17x10⁴ |
| 5 | 4.21x10⁴ | | | | 3.52x10⁴ | 3.65x10⁴ |
| 6 | 4.55x10⁴ | | | | 2.69x10⁴ | 3.52x10⁴ |

| | | | | | | |
|---|---|---|---|---|---|---|
| *Comparative Examples | | | | | | |

Examples 9 and 10 demonstrate a composition made using a propellant/inflator which does not comprise tetrafluoropropene. These compositions require the presence of a vapor pressure depressant in order to withstand temperatures of 54.4°C or greater in an aerosol can without venting. In contrast, compositions made using a propellant/inflator which comprises HFO-1234ze do not require a vapor pressure depressant in order to withstand temperatures of 54.4°C or greater in an aerosol can without venting (see Examples 1, 3, 5, and 7). Additionally, as shown in Table 3, compositions comprising an inflator/propellant which comprises HFO-1234ze and are free of vapor pressure depressant (Examples 1 and 3) show increased initial tire pressure when compared to compositions comprising a non-HFO-1234ze inflator/propellant (Example 10 and Commercial Product). Furthermore, compositions comprising a HFO-1234ze inflator/propellant may discharge more material from the can overall as shown in Table 4. Discharge amounts were tested multiple times for some examples. The weigh dispensed is shown in grams. In compositions comprising blends of HFO-1234ze more complete discharge is seen in the absence of a vapor pressure depressant.

**Table 4.**

| | Example 1 | Example 2 | Example 3 | Example 4 | Example 10* |
|---|---|---|---|---|---|
| 1 | 404.5 | 362.4 | 406.4 | 335.9 | 344.2 |
| 2 | - | 340.5 | 404.4 | 335.7 | 341.2 |
| 3 | - | - | 401.4 | 346.1 | 338.6 |
| Average | 404.5 | 351.4 | 404.1 | 339.2 | 341.3 |

| | | | | | |
|---|---|---|---|---|---|
| *Comparative Example | | | | | |

The singular forms "a," "an," and "the" include plural references unless the context clearly dictates otherwise. The endpoints of all ranges reciting the same characteristic or component are independently combinable and inclusive of the recited endpoint. All references are incorporated herein by reference. The terms "first," "second," and the like herein do not denote any order, quantity, or importance, but rather are used to distinguish one element from another. The various embodiments and ranges described herein are combinable to the extent that the description is not contradictory.

While typical embodiments have been set forth for the purpose of illustration, the foregoing descriptions should not be deemed to be a limitation on the scope herein.

## Claims

1. A sealer and inflator composition, comprising:
a concentrate comprising a polymer emulsion and a carrier; and
a propellant/inflator comprising tetrafluoropropene
wherein the polymer emulsion comprises an elastomeric polymer.

2. A composition according to claim 1, wherein said propellant/inflator comprises 1,3,3,3-tetrafluoropropene.

3. A composition according to claim 1, wherein said propellant/inflator comprises 1,3,3,3-tetrafluoropropene and 1,1,1,2-tetrafluoroethane.

4. A composition according to claim 1, wherein the composition further comprises a vapor pressure depressant.

5. A composition according to claim 4, wherein the vapor pressure depressant is present in an amount up to 40 weight percent, based on the total weight of the sealer and inflator composition.

6. A composition according to claim 1, wherein the composition further comprises a freezing point depressant.

7. A composition according to claim 6, wherein the freezing point depressant is present in an amount up to 25 weight percent, based on the total weight of the sealer and inflator composition.

8. A composition according to claim 1, wherein the composition further comprises a corrosion inhibitor.

9. A composition according to claim 8, wherein the corrosion inhibitor is present in an amount up to 2 weight percent, based on the total weight of the sealer and inflator composition

10. A composition according to claim 1, wherein the propellant/inflator is present in an amount of 20 weight percent to 95 weight percent based on the total weight of the sealer and inflator composition.

11. A composition according to claim 1, wherein the polymer emulsion has a solids content of 15 weight percent to 75 weight percent, based on the total weight of the emulsion, and comprises an elastomeric polymer.

12. A composition according to claim 1, wherein the polymer emulsion is present in an amount of 3 to 30 weight percent, based on the total weight of the sealer and inflator composition.

13. A composition according to claim 1 wherein the composition is free of a vapor pressure depressant.

14. A sealer and inflator composition, comprising:
3 to 30 weight percent of a polymer emulsion, the polymer emulsion comprises an elastomeric polymer;
20 to 80 weight percent of a carrier;
1 to 25 weight percent of a freezing point depressant; and
20 to 95 weight percent of a propellant/inflator comprising tetrafluoropropene, wherein weight percents are based on the total weight of the sealer and inflator composition.

15. A composition according to claim 14, wherein the carrier is water.

16. A composition according to claim 14, wherein the freezing point depressant is ethylene glycol.

17. A composition according to claim 14, wherein the polymer emulsion has a solids content of 15 weight percent to 75 weight percent, based on the total weight of the emulsion.

## Patentansprüche

1. Dichtungs- und Aufblaszusammensetzung, umfassend:
ein Konzentrat, umfassend eine Polymeremulsion und einen Träger; und
ein Treibmittel/Aufblasmittel, umfassend Tetrafluorpropen,
wobei die Polymeremulsion ein elastomeres Polymer umfasst.

2. Zusammensetzung nach Anspruch 1, wobei das Treibmittel/Aufblasmittel 1,3,3,3-Tetrafluorpropen umfasst.

3. Zusammensetzung nach Anspruch 1, wobei das Treibmittel/Aufblasmittel 1,3,3,3-Tetrafluorpropen und 1,1,1,2-Tetrafluorethan umfasst.

4. Zusammensetzung nach Anspruch 1, wobei die Zusammensetzung ferner ein Dampfdruck-Senkungsmittel umfasst.

5. Zusammensetzung nach Anspruch 4, wobei das Dampfdruck-Senkungsmittel bezogen auf das Gesamtgewicht der Dichtungs- und Aufblaszusammensetzung in einer Menge von bis zu 40 Gewichtsprozent vorhanden ist.

6. Zusammensetzung nach Anspruch 1, wobei die Zusammensetzung ferner ein Gefrierpunkt-Senkungsmittel umfasst.

7. Zusammensetzung nach Anspruch 6, wobei das Gefrierpunkt-Senkungsmittel bezogen auf das Gesamtgewicht der Dichtungs- und Aufblaszusammensetzung in einer Menge von bis zu 25 Gewichtsprozent vorhanden ist.

8. Zusammensetzung nach Anspruch 1, wobei die Zusammensetzung ferner ein Korrosionsschutzmittel umfasst.

9. Zusammensetzung nach Anspruch 8, wobei das Korrosionsschutzmittel bezogen auf das Gesamtgewicht der Dichtungs- und Aufblaszusammensetzung in einer Menge von bis zu 2 Gewichtsprozent vorhanden ist.

10. Zusammensetzung nach Anspruch 1, wobei das das Treibmittel/Aufblasmittel bezogen auf das Gesamtgewicht der Dichtungs- und Aufblaszusammensetzung in einer Menge von 20 Gewichtsprozent bis 95 Gewichtsprozent vorhanden ist.

11. Zusammensetzung nach Anspruch 1, wobei die Polymeremulsion bezogen auf das Gesamtgewicht der Emulsion einen Feststoffgehalt von 15 Gewichtsprozent bis 75 Gewichtsprozent aufweist und ein elastomeres Polymer umfasst.

12. Zusammensetzung nach Anspruch 1, wobei die Polymeremulsion bezogen auf das Gesamtgewicht der Dichtungs- und Aufblaszusammensetzung in einer Menge von 3 bis 30 Gewichtsprozent vorhanden ist.

13. Zusammensetzung nach Anspruch 1, wobei die Zusammensetzung frei von einem Dampfdruck-Senkungsmittel ist.

14. Dichtungs- und Aufblaszusammensetzung, umfassend:
3 bis 30 Gewichtsprozent einer Polymeremulsion, wobei die Polymeremulsion ein elastomeres Polymer umfasst;
20 bis 80 Gewichtsprozent eines Trägers;
1 bis 25 Gewichtsprozent eines Gefrierpunkt-Senkungsmittels; und
20 bis 95 Gewichtsprozent eines Treibmittels/Aufblasmittel, das Tetrafluorpropen umfasst, wobei die Gewichtsprozentangaben auf dem Gesamtgewicht der Dichtungs- und Aufblaszusammensetzung beruhen.

15. Zusammensetzung nach Anspruch 14, wobei der Träger Wasser ist.

16. Zusammensetzung nach Anspruch 14, wobei das Gefrierpunkt-Senkungsmittel Ethylenglycol ist.

17. Zusammensetzung nach Anspruch 14, wobei die Polymeremulsion bezogen auf das Gesamtgewicht der Emulsion einen Feststoffgehalt von 15 Gewichtsprozent bis 75 Gewichtsprozent aufweist.

## Revendications

1. Composition de scellement et gonflage comprenant :
un concentré constitué d'une émulsion polymère et d'un excipient, et
un agent de propulsion/gonflage comprenant du tétrafluoropropène,
dans laquelle l'émulsion polymère comprend un polymère élastomérique.

2. Composition suivant la revendication 1, dans laquelle ledit agent de propulsion de gonflage comprend du 1,3,3,3-tétrafluoropropène.

3. Composition suivant la revendication 1, dans laquelle ledit agent de propulsion/gonflage comprend du 1,3,3,3-térafluoropropène et du 1,1,1,2-tétrafluoroéthane.

4. Composition suivant la revendication 1, la composition comprenant, en outre, un agent d'abaissement de la pression de vapeur.

5. Composition suivant la revendication 4, dans laquelle l'agent d'abaissement de la pression de vapeur est présent dans une quantité jusqu'à 40% en poids, basé sur le poids total de la composition de scellage et gonflage.

6. Composition suivant la revendication 1, dans laquelle la composition comprend, en outre, un agent d'abaissement du point de congélation.

7. Composition suivant la revendication 6, dans laquelle l'agent d'abaissement du point de congélation est présent dans une quantité jusqu'à 25% en poids, basé sur le poids total de la composition de scellage et gonflage.

8. Composition suivant la revendication 1, la composition comprenant, en outre, un agent inhibiteur de corrosion.

9. Composition suivant la revendication 8, dans laquelle l'agent inhibiteur de corrosion est présent dans une quantité jusqu'à 2 pourcents en poids, basé sur le poids total de la composition de scellage et gonflage.

10. Composition suivant la revendication 1, dans laquelle l'agent de propulsion/gonflage est présent dans une quantité de 20 à 95 pourcents en poids, basé sur le poids total de la composition de scellage et gonflage.

11. Composition suivant la revendication 1, dans laquelle l'émulsion polymère présente une teneur en matières solides de 15 à 75 pourcents en poids basée sur le poids total de l'émulsion et comprend un polymère élastomérique.

12. Composition suivant la revendication 1, dans laquelle l'émulsion polymère est présente dans une quantité de 3 à 30 pourcents en poids, basée sur le poids total de la composition de scellement et gonflage.

13. Composition suivant la revendication 1, la composition étant exempte d'agent d'abaissement de la pression de vapeur.

14. Composition de scellage et gonflage comprenant :
3 à 30 pourcents en poids d'une émulsion polymère, l'émulsion polymère comprenant un polymère élastomérique,
20 à 80 pourcents d'un expient,
1 à 25 pourcents d'un agent d'abaissement du point de congélation, et
20 à 95 pourcents en poids d'un agent de propulsion/gonflage comprenant du tétrafluoropropène, les pourcentages en poids étant basés sur le poids total de la composition de scellage et gonflage.

15. Composition suivant la revendication 14, dans laquelle l'excipient est de l'eau.

16. Composition suivant la revendication 14, dans laquelle l'agent d'abaissement du point de congélation est de l'éthylène glycol.

17. Composition suivant la revendication 14, dans laquelle l'émulsion polymère présente une teneur en matières solides de 15 à 75 pourcents en poids, basée sur le poids total de l'émulsion.
